Europäisches Patentamt

European Patent Office

Office européen des brevets

(19)

(11) Veröffentlichungsnummer: **0 130 174**

A2

(12) # EUROPÄISCHE PATENTANMELDUNG

(21) Anmeldenummer: 84890108.8

(22) Anmeldetag: 05.06.84

(51) Int. Cl.⁴: **E 21 D 9/10**

(30) Priorität: 24.06.83 AT 2330/83

(43) Veröffentlichungstag der Anmeldung:
02.01.85 Patentblatt 85/1

(84) Benannte Vertragsstaaten:
BE DE FR GB

(71) Anmelder: VOEST-ALPINE Aktiengesellschaft
Friedrichstrasse 4
A-1011 Wien(AT)

(72) Erfinder: Dröscher, Bernhard, Dipl.-Ing.
Möbersdorfsiedlung 25
A-8740 Zeltweg(AT)

(72) Erfinder: Zitz, Alfred
Granitzenweg 13b
A-8740 Zeltweg(AT)

(74) Vertreter: Haffner, Thomas M., Dr. et al,
Patentanwaltskanzlei Dipl.-Ing. Adolf Kretschmer Dr.
Thomas M. Haffner Schottengasse 3a
A-1014 Wien(AT)

(54) Einrichtung zur Kontrolle der Position einer Streckenvortriebsmaschine.

(57) Die Einrichtung zur Kontrolle der Position einer Streckenvortriebsmaschine weist ein um eine Achse (3) schwenkbares Gehäuse (2) auf, innerhalb dessen drei Meßflächen (11, 14, 18) angeordnet sind. Die ersten beiden Meßflächen (11, 14) weisen Durchtrittsstellen (12) für einen Laserstrahl (5) auf, deren lichte Weite (a, c) in Ausbreitungsrichtung des Laserstrahles (5) abnimmt. Die lichte Weite (a) der Durchtrittsstelle (12) der ersten Meßfläche (11) ist kleiner als der Durchmesser (e) der Auftrefffläche des Laserstrahles auf dieser Meßfläche (11). Die Empfängerelemente (13, 16, 17) sind relative zur Achse der Durchtrittsstellen symmetrisch oder im Falle der letzten Meßfläche (18) in der Achse und jeweils innerhalb der Normalprojektion der Ränder der Durchtrittsstelle einer vorangehenden Meßfläche angeordnet.

FIG. 3

EP 0 130 174 A2

Einrichtung zur Kontrolle der Position einer Streckenvortriebsmaschine

Die Erfindung bezieht sich auf eine Einrichtung zur Kontrolle der Position einer Streckenvortriebsmaschine relativ zu einem im Raum orientierten Leitstrahl, mit einem orientierbaren Empfänger mit quer zum Leitstrahl verlaufenden Meßflächen, innerhalb welcher Meßflächen Empfängerelemente für den Leitstrahl angeordnet sind, wobei wenigstens die dem Sender des Leitstrahles nächstliegende Meßfläche an wenigstens einer Durchtrittsstelle für den Durchtritt des Leitstrahles durchlässig ist. Eine derartige Einrichtung ist beispielsweise der AT-PS 337 128 zu entnehmen. Bei dieser bekannten Einrichtung ist der Empfänger horizontal und vertikal verstellbar an einer Vortriebsmaschine gelagert. Die Empfängervorrichtung enthält zwei in Ausbreitungsrichtung eines Laserstrahles hintereinanderliegende Empfängerflächen, wobei die dem Sender des Laserstrahles zugewendete erste Fläche eine Bohrung aufweist. Auf der zweiten dahinterliegenden Empfängerfläche ist eine Mehrzahl von lichtempfindlichen Elementen angeordnet. Die Empfängervorrichtung wird zunächst so orientiert, daß der Laserstrahl durch die Bohrung der ersten Empfängerfläche hindurchtreten kann, und die Winkelabweichungen bzw. Fehlstellungen der Vortriebsmaschine ergeben sich aus der Beaufschlagung eines oder mehrerer der lichtempfindlichen Elemente der zweiten bzw. hinteren Empfängerfläche. Die Auswertung erfolgt über einen Rechner und erfordert eine Reihe von komplizierten rechnerischen Auswertungen. Darüber hinaus ist zumindest in der zweiten, hinteren Empfängerebene eine große Anzahl von lichtempfindlichen Elementen erforderlich, deren Signale gesondert voneinander ausgewertet werden müssen, um eine entsprechende Unterscheidung der Winkelfehlstellung zu ermöglichen.

Die Erfindung zielt nun darauf ab, eine Einrichtung der eingangs genannten Art zu vereinfachen und die Möglichkeit zu schaffen, mit einer relativ geringen Anzahl von Sensoren und damit auch einer verringerten Anzahl von Signalleitungen eine sichere Aussage über Winkelfehlstellungen einer Vortriebsmaschine zu erzielen. Die erfindungsgemäße Ausbildung zielt weiter darauf ab, den rechnerischen Aufwand wesentlich zu verringern und die Auswertung mit einfachen und betriebssicheren Logikschaltungen zu ermöglichen.

Zur Lösung dieser Aufgabe besteht die Erfindung im wesentlichen darin, daß die lichte Weite der Durchtrittsstelle geringer ist als die Querabmessung des Auftrefffleckes des Leitstrahles, und daß in einer weiteren Meßfläche wenigstens ein Empfängerelement innerhalb der Normalprojektion der Durchtrittsstelle, vorzugsweise in der Achse bzw. der Symmetrieebene der Durchtrittsstelle oder symmetrisch zu diesen angeordnet ist. Dadurch, daß die lichte Weite der Durchtrittsstelle geringer ist als die Querabmessung des Auftrefffleckes des Leitstrahles an dieser Durchtrittsstelle, ergibt sich eine erste relativ einfache Kontrolle für eine korrekte Stellung daraus, daß lichtempfindliche Elemente am Rand der Durchtrittsstelle gleichzeitig ein Signal ergeben. Wenn ausgehend aus einer derartigen Stellung der Empfänger verschwenkt wird und der hiebei zurückgelegte Verschwenkwinkel des Empfängers gemessen wird, kann die tatsächliche Stellung der Vortriebsmaschine dadurch ermittelt werden, daß nun noch ein weiteres Signal in der zweiten, hinteren Meßfläche auftritt, wenn das Empfängerelement in dieser weiteren Meßfläche in der Achse bzw. der Symmetrieebene der Durchtrittsstelle angeordnet ist. Im einfachsten Falle genügen somit drei Empfängerelemente, wobei die gleichzeitige Messung eines Signals an allen drei Empfängerelementen unter Berücksichtigung des Schwenkwinkels des Empfängers eine Aussage über die korrekte Position der Streckenvortriebsmaschine ergibt. Das gleichzeitige Auftreten von Signalen an drei Empfängerelementen ist mit einer relativ einfachen Logikschaltung in ein Signal für die korrekte Position umsetzbar,

ohne daß hiefür aufwendige Rechenoperationen erforderlich sind.

Vorzugsweise weist die erfindungsgemäße Einrichtung wenigstens zwei einander bezüglich der Achse bzw. Symmetrieebene der Durchtrittsstelle gegenüberliegende Empfängerelemente in einem Abstand voneinander auf, welcher geringer ist als die Querabmessung des Auftreffleckes des Leitstrahles. Wenn Abweichungen in Höhenrichtung von untergeordneter Bedeutung sind, genügen zwei derartige Empfängerelemente in der Meßfläche, welche die Durchtrittsstelle für den Leitstrahl aufweist, wobei Neigungs- und Gefällewinkel in konventioneller Weise durch Inklinometer ermittelt werden können. Der Empfänger muß zu diesem Zweck lediglich querverschieblich und um eine die Laserstrahlachse schneidende Achse schwenkbar sein, um die erforderlichen Signale für eine Korrektur zu erhalten. Die Schwenkbarkeit der Einrichtung ist hiebei vorzugsweise um eine Achse gegeben, welche mittig innerhalb der Durchtrittsstelle der dem Sender des Leitstrahles nächstliegenden Meßebene liegt, so daß sich die erforderlichen Nachstellvorgänge für den Empfänger auf ein Minimum reduzieren.

Die Empfindlichkeit und Genauigkeit der mit einer derartigen einfachen Einrichtung erzielbaren Aussage kann wesentlich erhöht werden, wenn, wie dies einer bevorzugten Weiterbildung der erfindungsgemäßen Einrichtung entspricht, in Ausbreitungsrichtung des Leitstrahles wenigstens drei Meßflächen hintereinander angeordnet sind, wobei wenigstens zwei benachbarte Meßflächen Durchtrittsstellen aufweisen. Auch hier genügt für die Auswertung eine einfache Logikschaltung und es können beispielsweise folgende Fälle unterschieden werden. Der Leitstrahl ergibt in der ersten Meßfläche lediglich ein Signal eines Empfängerelementes zu einer Seite der Durchtrittsstelle, wogegen in den nachfolgenden Meßflächen keine Signale auftreten. In diesem Fall muß der Empfänger verschwenkt oder verschoben werden, bis zumindest in der zweiten Meßfläche gleichfalls ein Signal auftritt, wobei dieses Signal beispielsweise an der dem ersten ein Signal gebenden Empfängerelement gegenüberliegenden Seite der Durchtrittsstelle der zweiten Ebene auftritt. Aus einer derartigen Kombination von auftretenden Signalen kann klar auf die Richtung der erforderlichen weiteren Korrektur der Orientierung des Empfängers geschlossen werden und eine seitliche Verschiebung des Empfängers sowie eine weitere Verschwenkung ergibt schließlich diejenige Position, in welcher wenigstens zwei Empfängerelemente zu beiden Seiten der Durchtrittsstelle in der ersten Meßebene und das Empfängerelement in der letzten Meßebene gleichzeitig ein Signal geben. In diesem Falle tritt an den Empfängerelementen der zweiten Meßebene dann kein Signal auf, wenn die lichte Weite der Durchtrittsstelle in der zweiten Ebene etwa gleich groß der lichten Weite der Durchtrittsstelle in der ersten Meßebene ist, wobei die Achsen bzw. Längsmittelebenen von hintereinander angeordneten Durchtrittsstellen miteinander fluchten müssen und mit der Position der mittig angeordneten Empfängerelemente in der letzten Meßebene übereinstimmen müssen. Die Ausbildung kann aber auch so getroffen sein, daß die lichte Weite von in Ausbreitungsrichtung des Leitstrahles aufeinanderfolgenden Durchtrittsstellen in der genannten Richtung abnimmt. In diesem Falle ist eine Ausbildung möglich, bei der die korrekte Position sich dann ergibt, wenn Empfängerelemente zu beiden Seiten der Durchtrittsstelle in jeder Meßfläche ebenso wie das oder die Empfängerelemente in der letzten Meßebene gleichzeitig ein Signal abgeben. Die Koinzidenz derartiger Signale kann wiederum mit einfachen Logikschaltungen festgestellt werden. Vorzugsweise sind hiebei die innerhalb der eine Durchtrittsstelle aufweisenden Meßflächen angeordneten Empfängerelemente am Rand der Durchtrittsstelle angeordnet.

In besonders einfacher Weise ist die Durchtrittsstelle als im wesentlichen vertikal orientierter Schlitz ausgebildet, wobei vorzugsweise eine Mehrzahl von Empfängerelementen parallel zur Symmetrieebene des Schlitzes paarweise angeordnet ist. Wenn die Signale in Längsrichtung des Schlitzes übereinanderliegender Empfängerelemente gesondert ausgewertet werden, ergibt sich auf diese Weise eine Information bezüglich der Höhenlage der Maschine, wobei bei wenigstens drei Meßflächen auch eine Aussage über die Winkellage getroffen werden kann. Eine derartige Winkelaussage für Neigungs- bzw. Gefällswinkel ergibt sich dann, wenn die Signale in aufeinanderfolgenden Meßflächen in verschiedener Höhenlage auftreten, wobei auch hier wiederum Voraussetzung ist, daß die einzelnen Empfängerelemente in den einzelnen Ebenen gesondert ausgewertet werden. Es können aber auch mehrere derartiger Empfängerelemente, welche in Höhenrichtung übereinander angeordnet sind, zu Gruppen zusammengefaßt werden, wodurch eine korrekte Aussage bezüglich der seitlichen Abweichungen der Maschine, insbesondere bezüglich der Schrägstellung relativ zur gewünschten Streckenlängsachse, in keiner Weise beeinträchtigt wird. In diesem Falle genügt es, wenn die Empfängerelemente zu einer Seite der Symmetrieebene des Schlitzes von Enden von Lichtwellenleitern gebildet sind, an deren andere Enden ein für mehrere Empfängerelemente gemeinsamer Signalaufnehmer angeschlossen ist, wodurch wiederum der Aufwand an Signalaufnehmern und Signalleitungen sowie der Aufwand für die Logikschaltung wesentlich verringert wird.

Eine besonders hohe Betriebssicherheit ergibt sich, wenn die Anordnung der einzelnen Empfängerelemente so getroffen ist, daß zwei benachbarte Paare einander bezüglich des Schlitzes gegenüberliegender Empfängerelemente in einem Abstand voneinander so angeordnet sind, daß eine Diagonale des von diesen Empfängerelementen aufgespannten Viereckes kleiner ist als die Querabmessung des Auftrefffleckes des Leitstrahles. In diesem Fall kann in jeder Neigungsstellung der Maschine rasch eine Position des Empfängers aufgesucht werden, welche eine eindeutige Aussage bezüglich der Winkellage relativ zur Streckenlängsachse ergibt.

Die erfindungsgemäße Einrichtung stellt somit eine einfache elektronische Visiereinrichtung dar, mit welcher selbsttätige Korrekturen der Maschinenabweichung in besonders einfacher Weise ermöglicht werden. Die Visiereinrichtung kann in einem in Höhenrichtung langgestreckten kastenförmigen Gehäuse untergebracht werden und kann wesentlich kleiner ausgebildet werden als entsprechende mechanische Visiereinrichtungen.

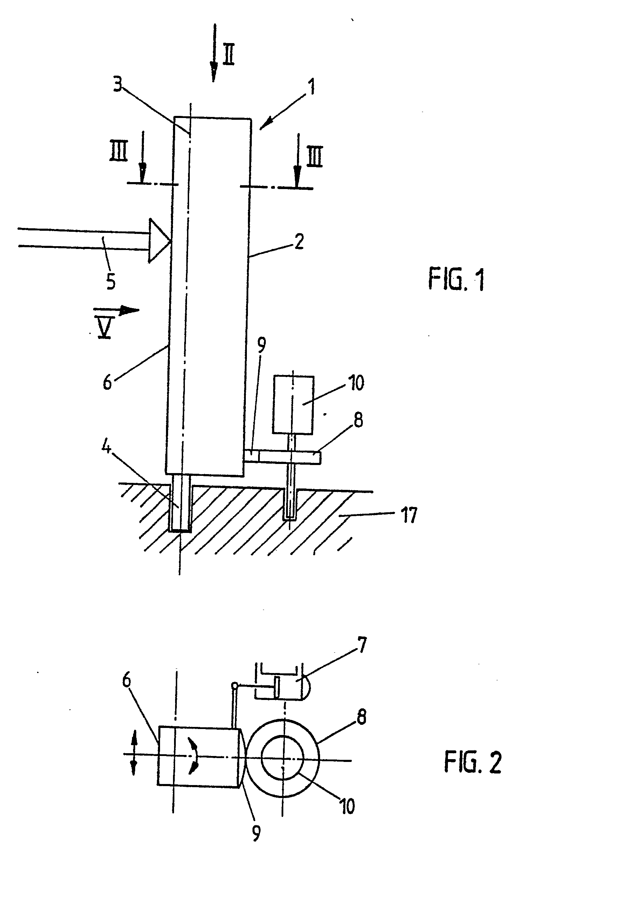

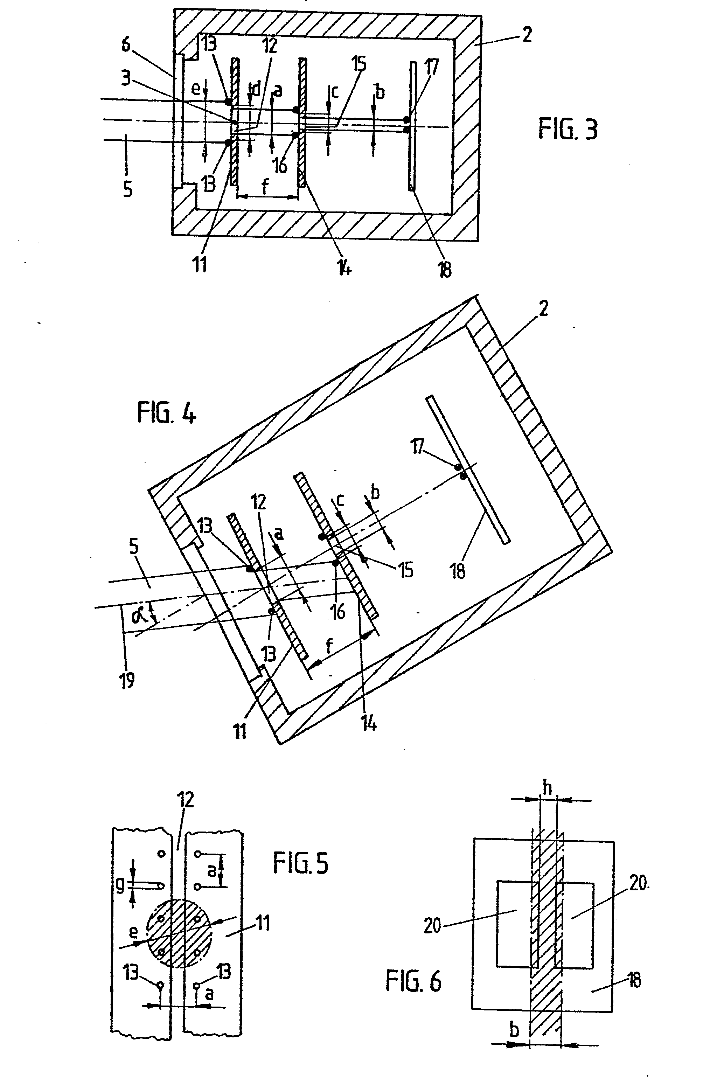

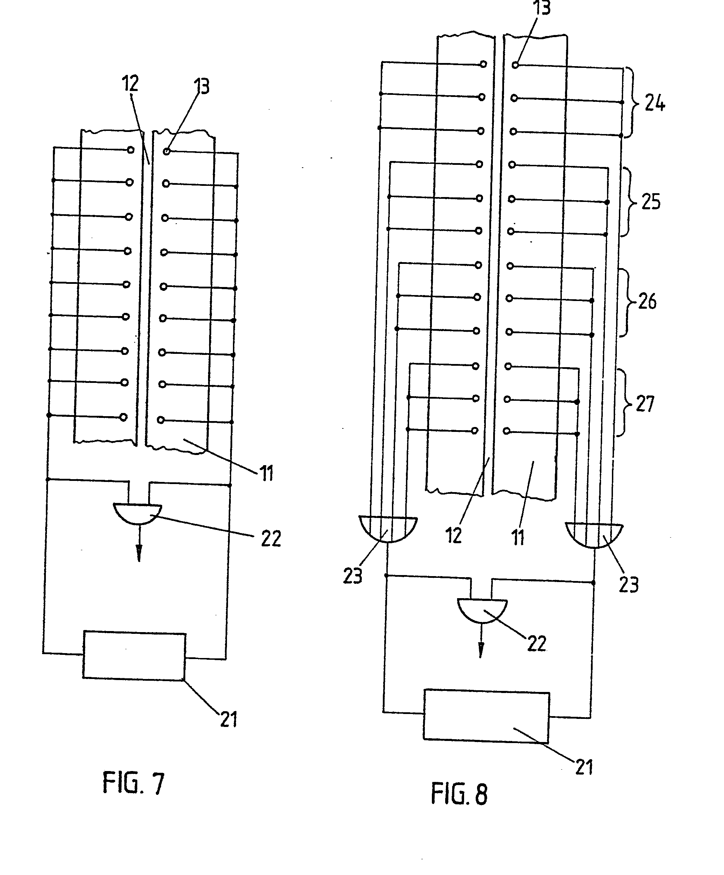

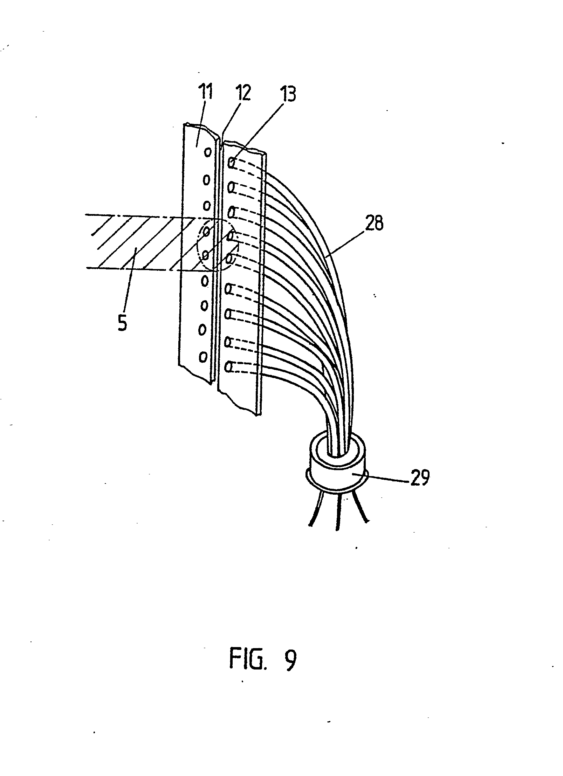

Die Erfindung wird nachfolgend an Hand eines in der Zeichnung dargestellten Ausführungsbeispieles näher erläutert. In dieser zeigen Fig. 1 eine schematische Seitenansicht der erfindungsgemäßen Einrichtung, Fig. 2 eine Draufsicht in Richtung des Pfeiles II der Fig. 1, Fig. 3 einen Schnitt nach der Linie III-III der Fig. 1, Fig. 4 eine analoge Darstellung wie Fig. 3 in verschwenkter Lage, Fig. 5 eine Ansicht eines Teiles einer Meßfläche in Richtung des Pfeiles V der Fig. 1, Fig. 6 eine analoge Darstellung wie Fig. 5 einer abgewandelten Ausführung einer Meßfläche, Fig. 7 eine Prinzipschaltungsanordnung für die Auswertung der Signale der Empfängerelemente, Fig. 8 eine abgewandelte Ausführung der Schaltungsanordnung nach Fig. 7 und Fig. 9 eine perspektivische Ansicht eines Teilbereiches einer weiteren Ausgestaltung einer Meßfläche.

In Fig. 1 ist das Gehäuse der Einrichtung 1 mit 2 bezeichnet. Das Gehäuse 2 ist um eine vertikale Achse 3 schwenkbar gelagert, wobei der Lagerzapfen mit 4 bezeichnet ist. Der Leitstrahl ist mit 5 angedeutet und trifft auf die langgestreckte Stirnfläche 6 auf, welche für den Leitstrahl durchlässig ist. Der Antrieb des Rahmens 2 quer zur Maschinenachse kann mittels eines nicht dargestellten Hydraulikzylinders und eines Kettentriebes oder aber mittels eines Hydro- oder Elektromotors und über eine Gewindespindel und Mutter erfolgen. Der Schwenkantrieb zur Verschwenkung um die Achse 3 kann von einem Hydraulikzylinder 7, wie dies in Fig. 2 dargestellt ist, abgeleitet werden, wobei ein Ritzel 8 mit einem Segment eines Ritzels 9 kämmt, über welches die jeweilige Drehstellung abgegriffen wird und von einem elektrischen Drehstellungsgeber 10 aufgenommen werden kann. Umgekehrt kann naturgemäß der elektrische Drehstellungsgeber 10 als Motor für den Schwenkantrieb ausgebildet sein, wobei die Drehstellung dann aus der Position des Kolbens im Hydraulikzylinder 7 abgeleitet werden kann. Die Funktion der Vorrichtung läßt sich am besten an Hand der Fig. 3 und 4 erläutern.

In Fig. 3 ist ein von einem Laserstrahl gebildeter Leitstrahl 5 angedeutet, welcher die lichtdurchlässige Stirnwand 6 durchsetzt und auf eine erste Meßfläche 11 auftrifft. Die erste Meßfläche 11 weist eine von einem Schlitz 12 gebildete Durchtrittsstelle für den Laserstrahl auf, an dessen Rändern lichtempfindliche Elemente 13 zu beiden Seiten des Schlitzes angeordnet sind. Der Schlitz 12 bildet eine Blende für den von einem Laserstrahl gebildeten Leitstrahl aus und weist eine lichte Weite a auf. In Abstand hinter der ersten Meßfläche 11 ist eine zweite Meßfläche 14 angeordnet, welche wiederum eine von einem Schlitz 15 gebildete Durchtrittsstelle und zu beiden Seiten der Durchtrittsstelle lichtempfindliche Elemente 16 aufweist. Die lichte Weite b des Schlitzes 15 ist hiebei kleiner als die lichte Weite a des Schlitzes 12 und der Abstand c der lichtempfindlichen Elemente 16 ist kleiner als die lichte Weite a des Schlitzes 12 in der ersten Meßfläche. Der bei der korrekten Positionierung des Gehäuses 2 durch beide Schlitze 12 und 15 hindurchtretende Strahl trifft schließlich auf ein lichtempfindliches Element 17 der dritten Meßebene 18 auf. Das Gehäuse 2 ist um die Achse 3 schwenkbar und diese Achse 3 liegt in der Ebene der ersten Meßfläche 11. Die lichtempfindlichen Elemente 13 der ersten Meßfläche 11 sind hiebei in einem Abstand d voneinander zu beiden Seiten des Schlitzes 12 angeordnet, welcher kleiner ist als der Durchmesser e des Auftreffleckes des Strahles 5. Bei einer Schrägstellung der Maschine trifft nun der Leitstrahl 5 nicht auf die lichtempfindlichen Elemente der dritten und letzten Meßebene 18 auf und muß daher durch Verschieben und/oder Verschwenken entsprechend ausgerichtet werden. Eine derartige Fehlstellung ist in Fig. 4 dargestellt. Die Strahlachse 19 des Strahles 5 durchdringt hiebei zwar bereits den Schlitz 12 der ersten Meßfläche 11, trifft aber außerhalb des Schlitzes 15 der zweiten Meßebene 14 auf. Bei der in Fig. 4 dargestellten Fehlstellung geben die beiden lichtempfindlichen Elemente 13 der ersten Meßfläche 11 zwar bereits ein Signal, es wird jedoch lediglich ein lichtempfindliches Element 16 an einer Seite des Schlitzes 15 der zweiten Meßfläche 14 ein Signal ergeben können. In der dritten Meßfläche 18 trifft der Strahl nicht auf und es wird daher am lichtempfindlichen Element 17 kein Signal auftreten. Bei einer derartigen Fehlstellung ergibt sich unmittelbar die Richtung der erforderlichen Verschwenkung des Gehäuses 2 um die Achse 3, um sicherzustellen, daß auch in der zweiten Meßfläche 14 die lichtempfindlichen Elemente zu beiden Seiten des Schlitzes 15 getroffen werden. Sobald diese Verschwenkung erreicht wird, ergibt sich die korrekte Stellung dann aus dem weiteren Auftreten eines Signales in der dritten Meßfläche 18. Der Abstand f zwischen der ersten und zweiten Meßfläche 11 und 14 ist so gewählt, daß bei dem als Maximum angenommenen oder zulässigen Wert der Winkelabweichung $\alpha$ eine Sensorreihe der zweiten Meßebene 14 gerade noch getroffen wird. Diese Bedingung ist dann erfüllt, wenn dieser Abstand $f \leq \dfrac{a}{\sin \alpha}$ ist.

Durch Drehung des Gehäuses 2 um die Achse 3 kann nun die korrekte Position aufgesucht werden und aus dem hiefür erforderlichen Schwenkwinkel ergibt sich unmittelbar der gemessene Fehlstellungswinkel der Maschine. Die Meßflächen 11 und 14 sind hiebei als Schlitzblenden mit im wesentlichen vertikal gerichteter Schlitzachse ausgebildet und die in einer Querschnittsebene in Fig. 3 und 4 dargestellten Empfängerelemente sind zu beiden Seiten der Längsmittelebene der Schlitze paarweise angeordnet. Dies ist in Fig. 5 und 6 näher erläutert, wobei in Fig. 5 eine Meßfläche 11 dargestellt ist, wie sie genausogut auch als eine Meßfläche 14 eingesetzt werden kann. Die Durchmesser der Empfängerelemente sind mit g bezeichnet und der Abstand a in Richtung quer zum Schlitz 12 ist so bemessen, daß der Durchmesser e des Auftrefffleckes des Leitstrahles bei korrekter Positionierung jeweils ein gegenüberliegendes Paar von Empfängerelementen 13 beaufschlagen kann. In Höhenrichtung des Schlitzes 12 sind eine Mehrzahl solcher Empfängerelemente 13 vorgesehen, wobei der Abstand dieser in Höhenrichtung aufeinanderfolgenden Empfängerelemente 13 wiederum mit a gewählt wird. Um sicherzustellen, daß in jeder Höhenlage wenigstens ein Paar voneinander bezüglich des Schlitzes 12 gegenüberliegenden Empfängerelementen 13 vom Leitstrahl beaufschlagt werden kann, muß dieser Abstand a so gewählt werden, daß die Diagonale des von vier benachbarten Empfängerelementen 13 aufgespannten Viereckes kleiner oder gleich ist dem Durchmesser des Auftrefffleckes des Leitstrahles. Unter Berücksichtigung des Durchmessers g der einzelnen Empfängerelemente ergibt sich somit $a \leqq \dfrac{e - g}{\sqrt{2}}$.

Wenn eine Unterscheidung einzelner Positionen in Höhenrichtung nicht erforderlich ist, können die Empfängerelemente, wie in Fig. 6 dargestellt, ausgebildet sein. Hier sind zwei langgestreckte Empfängerelemente 20 angeordnet, welche zu beiden Seiten eines Schlitzes liegen können. Die Ausbildung nach Fig. 6 ist aber insbesondere für die dritte Meßfläche 18 günstig, auf welche der Leitstrahl 5 mit einer lichten Weite b entsprechend der Weite des Schlitzes der davorliegenden zweiten Meßebene 14 auftreffen kann. Zwischen den Meßelementen 20 ist ein Abstand mit einer Breite h vorgesehen, welcher geringer ist als die lichte Weite b der davorliegenden Schlitzblende. Wenn beide Empfängerelemente 20 ein Signal liefern, ergibt sich daraus die korrekte Lage der Einrichtung 1. Die Empfängerelemente 20 sind hiebei als Doppelfeldsensor ausgebildet, dessen beide Empfangsfelder in einem Abstand von einigen µm voneinander liegen.

Zur Erfassung einer vertikalen Abweichung der Maschine genügt es bei der Verwendung von Laser- oder Lichtstrahlen an der Frontscheibe 6 eine vertikale Skala anzubringen. Eine Bestimmung der vertikalen Abweichung kann aber auch dadurch erfolgen, daß die übereinander angeordneten Empfängerelemente 13 zu einer Seite eines Schlitzes 12 innerhalb der Meßfläche 11 gesondert ausgewertet werden, wodurch sich allerdings der Aufwand für die Auswertung und für die Empfängerelemente erhöht.

Eine schematisch besonders einfache Auswertung der Signale ergibt sich bei der Darstellung nach Fig. 7 dadurch, daß alle Signalleitungen der Empfängerelemente jeder Seite der Meßfläche 11 gemeinsam zu einer Auswerteschaltung geführt werden. Für diesen Fall ist eine Schaltungsanordnung 21 zur Erkennung der Richtung der erforderlichen Korrektur sowie ein UND-Gatter vorgesehen. Sobald beide Reihen der Empfängerelemente ein Signal liefern, kann auf Grund des UND-Gatters 22 die Korrekturbewegung gestoppt werden. Wenn in Höhenrichtung übereinanderliegende Empfängerelemente einer Meßfläche 11 zu Gruppen zusammengefaßt werden, wie dies in Fig. 8 dargestellt ist, lassen sich weitere logische Aussagen treffen. Bei der Darstellung nach Fig. 8 sind jeweils drei in vertikaler Richtung des Schlitzes 12 übereinanderliegende Empfängerelemente 13 zu Gruppen zusammengefaßt und ihre Signalleitungen jeweils für beide Seiten gesondert einem ODER-Gatter 23 zugeführt. Die übrige Schaltungsanordnung mit dem UND-Gatter und der Einrichtung zur Erkennung der erforderlichen Richtungskorrektur 21 bleibt hiebei unberührt. In vertikaler Richtung wird jedoch auf diese Weise eine stufenweise Nachführung ermöglicht, wenn die einzelnen Signale der übereinanderliegenden Gruppen 24, 25, 26 und 27 gesondert ausgewertet werden. Bei Verwendung einer Schaltungsanordnung entsprechend der Fig. 8 für zwei hintereinanderliegende Meßflächen 11 und 14 ist auch eine Aussage über den Neigungs- oder Gefällswinkel möglich, wenn der Leitstrahl in einer Meßfläche eine andere Gruppe von Empfängerelementen beaufschlägt als in der nachfolgenden zweiten Meßfläche.

Eine besonders einfache Ausbildung einer Maßfläche 11, mit welcher eine Unterscheidung in Höhenrichtung allerdings nicht möglich ist, ist in Fig. 9 dargestellt. Die Empfängerelemente 13 sind hiebei von den freien Enden von Lichtwellenleitern 28 gebildet und es ist für die Lichtwellenleiter der Empfängerelemente 13 zu einer Seite des Schlitzes 12 ein gemeinsamer Signalaufnehmer 29 vorgesehen. Eine derartige Ausbildung nach Fig. 9 kann bei Verzicht auf eine Auflösung in Höhenrichtung für alle Meßflächen verwendet werden. Derartige Lichtwellenleiter 28 haben den Vorteil, daß sie einen sehr kleinen Durchmesser aufweisen können und dies kann für die Genauigkeit besonders in der dritten Meßfläche von großer Bedeutung sein. Lichtwellenleiter können auch sehr exakt in Bohrungen plaziert werden.

Patentansprüche:

1. Einrichtung zur Kontrolle der Position einer Streckenvortriebsmaschine relativ zu einem im Raum orientierten Leitstrahl, mit einem orientierbaren Empfänger mit quer zum Leitstrahl verlaufenden Meßflächen, innerhalb welcher Meßflächen Empfängerelemente für den Leitstrahl angeordnet sind, wobei wenigstens die dem Sender des Leitstrahles nächstliegende Meßfläche an wenigstens einer Durchtrittsstelle für den Durchtritt des Leitstrahles durchlässig ist, dadurch gekennzeichnet, daß die lichte Weite (a) der Durchtrittsstelle (12) geringer ist als die Querabmessung (e) des Auftrefffleckes des Leitstrahles (5), und daß in einer weiteren Meßfläche (14, 18) wenigstens ein Empfängerelement (16, 17) innerhalb der Normalprojektion der Durchtrittsstelle (12), vorzugsweise in der Achse bzw. der Symmetrieebene der Durchtrittsstelle oder symmetrisch zu diesen angeordnet ist.

2. Einrichtung nach Anspruch 1, dadurch gekennzeichnet, daß wenigstens zwei einander bezüglich der Achse bzw. Symmetrieebene der Durchtrittsstelle (12) gegenüberliegende Empfängerelemente (13, 16) in einem Abstand (d, c) voneinander angeordnet sind, welcher geringer ist als die Querabmessung (e, a) des Auftrefffleckes des Leitstrahles.

3. Einrichtung nach Anspruch 1 oder 2, dadurch gekennzeichnet, daß in Ausbreitungsrichtung des Leitstrahles wenigstens drei Meßflächen (11, 14, 18) hintereinander angeordnet sind, wobei wenigstens zwei benachbarte Meßflächen (11, 14) Durchtrittsstellen (12) aufweisen.

4. Einrichtung nach Anspruch 1, 2 oder 3, dadurch gekennzeichnet, daß die lichte Weite (a, c) von in Ausbreitungsrichtung des Leitstrahles aufeinanderfolgenden Durchtrittsstellen (12) in der genannten Richtung abnimmt.

5. Einrichtung nach einem der Ansprüche 1 bis 4, dadurch gekennzeichnet, daß die innerhalb der eine Durchtrittsstelle (12) aufweisenden Meßflächen (11, 14) angeordneten Empfängerelemente (13, 16) am Rand der Durchtrittsstelle (12) angeordnet sind.

6. Einrichtung nach einem der Ansprüche 1 bis 5, dadurch gekennzeichnet, daß die Durchtrittsstelle (12) als im wesentlichen vertikal orientierter Schlitz ausgebildet ist.

7. Einrichtung nach einem der Ansprüche 1 bis 6, dadurch gekennzeichnet, daß eine Mehrzahl von Empfängerelementen (16, 16) parallel zur Symmetrieebene des Schlitzes (12) paarweise angeordnet ist.

8. Einrichtung nach einem der Ansprüche 1 bis 7, dadurch gekennzeichnet, daß zwei benachbarte Paare einander bezüglich des Schlitzes (12) gegenüberliegender Empfängerelemente (13) in einem Abstand voneinander so angeordnet sind, daß eine Diagonale des von diesen Empfängerelementen (13) aufgespannten Viereckes kleiner ist als die Querabmessung (e) des Auftrefffleckes des Leitstrahles.

9. Einrichtung nach einem der Ansprüche 1 bis 8, dadurch gekennzeichnet, daß die Empfängerelemente (13) zu einer Seite der Symmetrieebene des Schlitzes (12) von Enden von Lichtwellenleitern (28) gebildet sind, an deren andere Enden ein für mehrere Empfängerelemente (13) gemeinsamer Signalaufnehmer (29) angeschlossen ist.

10. Einrichtung nach einem der Ansprüche 1 bis 9, dadurch gekennzeichnet, daß die Einrichtung (1) um eine Achse (3) schwenkbar orientierbar ist, welche mittig innerhalb der Durchtrittsstelle (12) der dem Sender des Leitstrahles (5) nächstliegenden Meßfläche (11) liegt.

FIG. 1

FIG. 2

0130174

FIG. 3

FIG. 4

FIG. 5

FIG. 6

FIG. 7

FIG. 8

FIG. 9